# EUROPEAN PATENT SPECIFICATION

(11) **EP 1 365 219 B1**
(45) Date of publication and mention of the grant of the patent: **13.12.2006**
(21) Application number: 03253157.6
(22) Date of filing: 21.05.2003
(51) Int. Cl.: G01K 1/10

(54) **Thermocouple protective tube**
Schutzrohr für Thermoelement
Tube de protection pour thermocouple

(30) Priority: 22.05.2002 JP 2002147892
(43) Date of publication of application: 26.11.2003
(73) Proprietor: Shin-Etsu Chemical Co., Ltd., Chiyoda-ku, Tokyo (JP)
(72) Inventor: Kushihashi, Takuma, Gunma Complex, Annaka-shi, Gunma-ken (JP); Satoh, Akira, c/o Gunma Complex, Annaka-shi, Gunma-ken (JP); Yamaguchi, Kazuhiro, c/o Gunma Complex, Annaka-shi, Gunma-ken (JP)
(74) Representative: Cooper, John

(56) References cited:
- EP-A- 0 928 958
- US-A- 4 430 518
- US-A- 5 181 779
- US-A- 5 850 072
- SAMSONOW E A: "NICHTMETALLENE THERMOPAARE UND SCHUTZROHRE" VDI Z, VDI VERLAG GMBH. DUSSELDORF, DE, vol. 111, no. 24, 1 October 1969 (1969-10-01), pages 1337-1342, XP002077215 ISSN: 0042-1766
- PATENT ABSTRACTS OF JAPAN vol. 2002, no. 09, 4 September 2002 (2002-09-04) & JP 2002 156287 A (ISUZU CERAMICS RES INST CO LTD;JAPAN SCIENCE & TECHNOLOGY CORP), 31 May 2002 (2002-05-31)

## Description

### BACKGROUND OF THE INVENTION

### Field of the Invention

This invention relates to a protective tube for a thermocouple used for high temperature measurement in an oxidizing or corrosive atmosphere.

### Related Art

A thermocouple is widely used as a practical means for measuring high temperature. As a wire (element) of the thermocouple, an appropriate material is selected and used in accordance with a temperature range and an object to be measured or an environment in which the thermocouple is to be installed.

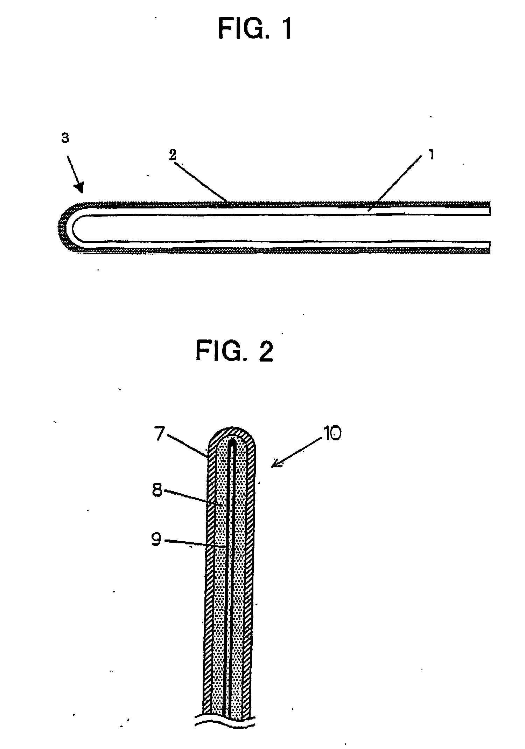

Under a severe condition such as corrosive atmosphere or intensely vibrating place, as shown in Fig.2, there is used a so-called sheathe-type thermocouple 10, wherein a thermocouple wire 9 is compactly sealed together with an insulator 8 without air gap in a thermocouple protective tube 7 made of metal or ceramic. As a material for the thermocouple protective tube 7, SUS or Inconel (trademark) is used because of its high melting point, oxidation resistance and so on. As the insulator 8 to be sealed together with the wire 9, magnesia (magnesium oxide) is used because of its stability even at high temperature and large thermal conductivity.

When a material for a protective tube is SUS or Inconel, the critical temperature at which the tube can be used continuously is around 1100 °C in the atmosphere, for example. If it is further severer condition where these materials cannot stand up any more, other material such as Hastelloy, alumina or molybdenum is used for the protective tube to obtain higher oxidation resistance, carbonization resistance and heat resistance.

In ceramic industry, glass manufacture, single crystal growth, wafers in semiconductor manufacturing processes and dry cleaning of a process chamber, temperature measurement is often performed at a high temperature and in an oxidizing or other corrosive atmosphere. At a high temperature and in an oxidizing or corrosive atmosphere as above, especially in an atmosphere containing fluorine gas, the protective tube made of the above-mentioned materials may be oxidized or corroded, so that a thermocouple using such a protective tube cannot be used for a long period.

If a wire within a protective tube is deteriorated during progress of a process, temperature cannot be measured and then the process must be interrupted, resulting in decrease of productivity. Meanwhile, if a thickness of the protective tube is made large to obtain long lifetime, heat capacity of the protective tube becomes large because the above-mentioned conventional materials have high density and large specific heat, resulting in a problem that response to temperature change becomes worse.

### SUMMARY OF THE INVENTION

Accordingly, an object of the present invention is to provide a thermocouple protective tube having excellent resistances even at a high temperature and in an oxidizing or other corrosive atmosphere for a long period and having high response to temperature change.

In order to achieve the above-mentioned object, according to the present invention, there is provided a thermocouple protective tube for protecting a thermocouple wire, comprising a hollow cylinder-shaped body which has one end closed and is composed of pyrolytic boron nitride, and a coating layer which is formed on an outer surface of the cylinder-shaped body and is composed of at least one material selected from pyrolytic carbon, carbon-containing pyrolytic boron nitride, silicon nitride, silicon carbide and aluminum nitride.

Pyrolytic boron nitride constituting the cylinder-shaped body has excellent resistance at a high temperature and also good response to temperature change. Further, pyrolytic carbon, carbon-containing pyrolytic boron nitride, silicon nitride, silicon carbide or aluminum nitride constituting the coating layer has more excellent resistance than pyrolytic boron nitride at a high temperature and in an oxidizing or other corrosive atmosphere and so on. Accordingly, if a thermocouple protective tube comprises a cylinder-shaped body composed of pyrolytic boron nitride and a coating layer formed on an outer surface of the cylinder-shaped body and composed of a material selected in accordance with atmosphere, the tube is not oxidized or corroded at a high temperature and in an oxidizing or other corrosive atmosphere. For example, a thermocouple using a thermocouple protective tube, wherein a coating layer composed of pyrolytic carbon is formed on an outer surface of a cylinder-shaped body composed of pyrolytic boron nitride, enables stable measurement of temperature for a long period even in a high temperature atmosphere containing fluorine gas.

In this case, the coating layer can be formed on the outer surface of the cylinder-shaped body by chemical vapor deposition.

According to chemical vapor deposition as described above, a fine coating layer comprising a desired component and having a desired thickness can be formed on the outer surface of the cylinder-shaped body.

It is preferable that a thickness of the cylinder-shaped body is within the range of 0.3-1.5 mm and a thickness of the coating layer is within the range of 5-50 µm.

In a case that a thickness of the cylinder-shaped body is within the above-described range, the cylinder-shaped body can have excellent strength and response to temperature change.

In a case that a thickness of the coating layer is within the above-described range, even if the tube is subjected to an oxidizing or other corrosive atmosphere at high temperature, the coating layer can exhibit an excellent resistance and have a little possibility to exfoliate.

Regarding a surface roughness of the cylinder-shaped body, it is preferable that Ra is not less than 0.5 µm and Rmax is not less than 5 µm.

In a case that a surface roughness of the cylinder-shaped body is as large as the above-described value, the physical bond strength between the cylindrical body and the coating layer becomes higher, so that the coating layer is difficult to exfoliate.

Also, it is preferable that a difference in coefficient of linear expansion between the cylinder-shaped body and the coating layer is not more than 2.5×10⁻⁶ /°C.

In a case that a difference in coefficient of linear expansion between the cylinder-shaped body and the coating layer is as small as the above-described value, the coating layer has a very little possibility to exfoliate even though the temperature is increased and decreased repeatedly or rapidly.

Furthermore, it is preferable that a density of the cylinder-shaped body is not less than 1.9 g/cm³ and not more than 2.1 g/cm³.

In a case that a density of the cylinder-shaped body is within the above-described range, the cylinder-shaped body can have excellent strength and response to temperature change, and also can be produced easily by chemical vapor deposition.

An outer diameter of the cylinder-shaped body is preferably not less than 3 mm and not more than 15 mm.

Though sizes of the cylinder-shaped body and the like can be determined appropriately, in a case that the cylinder-shaped body has a size as described above, it can have good response to temperature change, be easy to handle and also be produced easily.

If a sheathe-type thermocouple is made up using the thermocouple protective tube according to the present invention as above, the thermocouple can be used stably for a long period even at a high temperature and in an oxidizing or other corrosive atmosphere. Therefore interruption of a process caused by trouble of a temperature-measurement system can be prevented, which contributes improvement of productivity.

As described above, if a thermocouple protective tube comprises a hollow cylinder-shaped body which has one end closed and is composed of pyrolytic boron nitride, and a coating layer which is composed of at least one material selected, in accordance with its purpose, from pyrolytic carbon, carbon-containing pyrolytic boron nitride, silicon nitride, silicon carbide and aluminum nitride and is formed on an outer surface of the cylinder-shaped body, the thermocouple protective tube can be used stably for a long period even at a high temperature and in an oxidizing or other corrosive atmosphere and can have good response to temperature change. Accordingly, in a case of measuring temperature by a sheathe-type thermocouple using the protective tube, a wire of the thermocouple in the inside of the protective tube cannot be damaged and so on, and therefore interruption of process due to any trouble of a temperature measurement system can be prevented, which can contribute improvement of productivity.

### BRIEF EXPLANATION OF THE DRAWINGS

Fig.1 is a schematic view of an example of a thermocouple protective tube according to the present invention.
Fig.2 is a schematic view showing a cross section of a conventional sheathe-type thermocouple.

### PREFERRED EMBODIMENTS OF THE INVENTION

Hereinafter, embodiments of the present invention will be explained specifically. However, the present invention is not limited thereto.

Fig. 1 is a view schematically showing an example of a thermocouple protective tube 3 according to the present invention, wherein a coating layer 2 is formed on an outer surface of a hollow cylinder-shaped body 1 made of pyrolytic boron nitride and having one end closed.

Pyrolytic boron nitride, which composes the cylinder-shaped body 1, is a material having excellent resistance at high temperature and can be used up to around 2200 °C in an inert atmosphere. The cylinder-shaped body composed of pyrolytic boron nitride can be preferably produced by chemical vapor deposition, for example. Especially, the pyrolytic boron nitride obtained by chemical vapor deposition has so fine structure that gas cannot permeate it, and also has very good response to temperature change owing to a lower density and smaller specific heat than metal.

In a thermocouple protective tube according to the present invention, a coating layer composed of at least one selected from the group consisting of pyrolytic carbon, carbon-containing pyrolytic boron nitride, silicon nitride, silicon carbide and aluminum nitride is formed on an outer surface of the above-mentioned cylinder-shaped body composed of pyrolytic boron nitride. Because this coating layer functions as a heat-absorbing layer and thus effectively absorbs the radiant heat from a heat source, the radiant heat hardly penetrates through the layer. Therefore, a thermocouple protective tube having better response to temperature change can be provided.

For example, pyrolytic carbon can be used up to around 2500°C in an inert atmosphere. And carbon is difficult to be corroded even if it is exposed to fluorine gas because a difference in electronegativity between carbon and fluorine is small. Accordingly, if a thermocouple protective tube is manufactured by coating, with pyrolytic carbon, an outer surface of the cylinder-shaped body composed of pyrolytic boron nitride, a thermocouple wire can be protected in the protective tube even in a high temperature atmosphere containing fluorine gas. Thus the thermocouple protective tube can be durable for a long period use.

On the other hand, although in an oxidizing atmosphere, pyrolytic boron nitride itself which composes a cylinder-shaped body can be used up to around 800 °C, the effect of oxidization is not negligible at higher temperature. Meanwhile, for example, silicon carbide can be used up to around 1600 °C even in an oxidizing atmosphere. Therefore, if a thermocouple protective tube is manufactured by coating, with silicon carbide coat, an outer surface of the cylinder-shaped body composed of pyrolytic boron nitride, the thermocouple protective tube can be used for a long period even at a high temperature and in an oxidizing atmosphere.

Materials having oxidation resistance or corrosion resistance to atmosphere to be used may be selected appropriately for a coating layer. In addition to pyrolytic carbon and silicon carbide as above, the coating layer can be composed of any one of carbon-containing pyrolytic boron nitride, silicon nitride, and aluminum nitride depending on the atmosphere gas, or may be formed by laminating a plurality of layers composed of each material. The coating layer composed of these materials also has excellent resistance at a high temperature and in an oxidizing or other corrosive atmosphere. For example, a coating layer composed of silicon nitride has excellent resistance to an oxidizing atmosphere.

In a thermocouple protective tube according to the present invention comprising the cylinder-shaped body and the coating layer as mentioned above, its thickness, density or the like may be determined in view of heat-resistance, strength, response to temperature change and so on. As a result of diligent studies by the inventors of the present invention, the following have been found.

Firstly, as for thickness of the cylinder-shaped body composed of pyrolytic boron nitride, if its thickness is less than 0.3 mm, it may be damaged at the time of handling. On the other hand, if the thickness is more than 1.5 mm, heat capacity of the protective tube becomes large, which may result in worse response to temperature change. Therefore, it is preferable that the thickness of the cylinder-shaped body is 0.3-1.5 mm. In a case that the thickness of the cylinder-shaped body is within this range, the cylinder-shaped body can have excellent strength and response to temperature change.

As for thickness of the coating layer, if its thickness is not more than 5 µm, the coating layer may be less effective. On the other hand, if the thickness is not less than 50 µm, the coating layer may exfoliate in use. Therefore, it is preferable that a thickness of the coating layer is 5-50 µm. In a case that a thickness of the coating layer is within this range, the coating layer can have excellent resistance even in a high temperature and oxidizing or other corrosive atmosphere and has little possibility to exfoliate.

Further, as for density of the cylinder-shaped body composed of pyrolytic boron nitride, it is preferable that its density is determined so as to have sufficient strength as a thermocouple protective tube as well as to have high thermal conductivity and excellent response to temperature change. Specifically, its density is preferably not less than 1.9 g/cm³ and not more than 2.1 g/cm³. If the density of the cylinder-shaped body is more than 2.1 g/cm³, it means that pyrolytic boron nitride is well crystallized. However, when the density increases, thermal conductivity to the thickness direction of the cylinder-shaped body decrease, which may result in worse response to temperature change. The reason is based on anisotropy in thermal conductivity of pyrolytic boron nitride, that is, as crystallinity of pyrolytic boron nitride is higher, the difference of thermal conductivity between in the thickness direction and in the side direction becomes larger.

Meanwhile, in a case that the density of pyrolytic boron nitride is 1.9 g/cm³-2.1 g/cm³, it can have excellent strength and response to temperature change and also an advantage of enabling easy production by chemical vapor deposition.

Though sizes of a cylinder-shaped body composed of pyrolytic boron nitride may be determined appropriately, when handling or the like is considered, it is preferable that an outer diameter of the cylinder-shaped body is not less than 3 mm and not more than 15 mm. In a case that the cylinder-shaped body has such a size, it has sufficient strength as a protective tube and response to temperature change. Further, a thermocouple using the cylinder-shaped body can be handled easily and also produced easily. Meanwhile, if the outer diameter of the cylinder-shaped body is less than 3 mm, it may be damaged at the time of handling. On the other hand, if the outer diameter of the cylinder-shaped body is more than 15 mm, heat capacity of the protective tube itself becomes large. In addition, the amount of an insulator sealed together with a thermocouple wire in the protective tube also increases, so that heat capacity of the insulator also becomes large, which may result in worse response to temperature change.

Moreover, in a thermocouple protective tube according to the present invention, in order to prevent exfoliation of a coating layer when the temperature is increased and decreased repeatedly, it is preferable that a surface of the cylinder-shaped body composed of pyrolytic boron nitride is made relatively rough and the difference in coefficient of linear expansion between the cylinder-shaped body and the coating layer is small.

Specifically, as for surface roughness of the cylinder-shaped body, in a case that Ra is not less than 0.5 µm and Rmax is not less than 5 µm, physical bond strength of the coating layer formed on the outer surface of the cylinder-shaped body is made high by Anchor effect. Therefore the coating layer is difficult to exfoliate.

Meanwhile, if the difference in coefficient of linear expansion between the cylinder-shaped body and the coating layer is too large, the coating layer may exfoliate by increasing and decreasing the temperature repeatedly. However, in a case that the difference is not more than 2.5×10⁻⁵ /°C, expansion coefficients of the cylinder-shaped body and the coating layer are approximate to each other, so that the coating layer is difficult to exfoliate even in measurement of high temperature. That is, by making the difference in coefficient of linear expansion between the cylinder-shaped body and the coating layer not more than 2.5×10⁻⁶ /°C, it is possible to obtain a good adhesion between the cylinder-shaped body and the coating layer. The possibility of exfoliation of the coating layer is very small even if the temperature is increased and decreased repeatedly or rapidly. Therefore, there can be provided a highly reliable thermocouple protective tube.

Though a method for producing the above-mentioned thermocouple protective tube according to the present invention is not particularly limited, all of a cylinder-shaped body and a coating layer which compose the thermocouple protective tube can be produced by chemical vapor deposition. The thermocouple protective tube thus produced by chemical vapor deposition also has advantages of being high pure, generating outgas and hence not becoming a source of contamination to products (objects to be measured). In addition, surface roughness, thickness, density or the like of the cylinder-shaped body and the coating layer can be set to desirable values by adjusting conditions of chemical vapor deposition such as composition of material gases, pressure of atmosphere, and temperature.

For example, according to a well-known method using boron trichloride and ammonia as raw materials, a hollow cylinder-shaped body, which has one end closed and is composed of pyrolytic boron nitride, is formed on a graphite susceptor by chemical vapor deposition. Next, on outer surface of the cylinder-shaped body, a coating layer is formed as a heat absorbing layer or protecting layer, which is composed of at least one element selected from pyrolytic carbon, carbon-containing pyrolytic boron nitride, silicon nitride, silicon carbide and aluminum nitride. The coating layer can be also formed by chemical vapor deposition in the same manner as the cylinder-shaped body. In this way, a coating layer composed of desirable components and having a desirable thickness can be formed closely on an outer surface of the cylinder-shaped body.

For example, the chemical vapor deposition is performed by using hydrocarbon gas such as methane as raw material for forming pyrolytic carbon, or by using boron trichloride, ammonia and hydrocarbon gas as raw material for carbon-containing pyrolytic boron nitride. By this means, a coating layer is formed on an outer surface of a cylinder-shaped body and then a thermocouple protective tube according to the present invention can be produced.

A sheathe-type thermocouple using the thus-produced thermocouple protective tube can have good response to temperature change and the protective tube cannot be oxidized or corroded, even if the thermocouple is used in a high temperature and oxidizing or other corrosive atmosphere for a long period. Therefore the temperature can be measured continuously and accurately.

### EXAMPLES

Hereinafter, the present invention will be explained in reference to examples of the present invention and comparative examples.

### (Example 1)

Ammonia 5SLM and boron trichloride 2SLM were reacted under the pressure of 10 Torr and the temperature of 1800 °C to produce a cylinder-shaped body composed of pyrolytic boron nitride and having one end closed, which has an inner diameter of 5 mm, an outer diameter of 7 mm and a length of 250 mm, on a graphite susceptor by chemical vapor deposition. Then, a layer of pyrolytic carbon having a thickness of 25 µm was formed on an outer surface of the cylinder-shaped body by thermally decomposing methane 4SLM under the pressure of 5 Torr and the temperature of 1750 °C .

An R-type thermocouple wire was sealed without air gap together with magnesia serving as insulator in the thus-obtained protective tube to configure a sheathe-type thermocouple. This sheathe-type thermocouple was attached in the inside of a chamber and 1% NF₃/N₂ was flowed into the chamber. Then a heater installed in the inside of the chamber was electrically operated to increase the temperature in the chamber to 1300 °C. Even though 150 hours had passed, there was no change in the appearance of the protective tube and breaking of the thermocouple was not generated.

### (Comparative example 1)

In the same manner as Example 1, a sheathe-type thermocouple was configured using a thin tube composed of alumina and having one end closed, which has an inner diameter of 5 mm, an outer diameter of 7 mm and a length of 250 mm. This sheathe-type thermocouple was attached in the inside of a chamber and 1% NF₃/N₂ was flowed into the chamber. Then a heater installed in the inside of the chamber was electrically operated to increase the temperature in the chamber to 1300 °C. When 34 hours had passed, the thermocouple had been broken and the measurement of temperature was not able to continue. Corrosion caused by NF₃ gas was observed on a surface of the protective tube.

### (Comparative example 2)

In the same manner as Example 1, a sheathe-type thermocouple was configured using a thin tube composed of molybdenum and having one end closed, which has an inner diameter of 5 mm, an outer diameter of 7 mm and a length of 250 mm. This sheathe-type thermocouple was attached in the inside of a chamber and 1% NF₃/N₂ was flowed into the chamber. Then a heater installed in the inside of the chamber was electrically operated to increase the temperature in the chamber to 1300 °C. When 62 hours had passed, the thermocouple had been broken and the measurement of temperature was not able to continue. Corrosion caused by NF₃ gas was observed on a surface of the protective tube.

### (Example 2)

In the same manner as Example 1, a cylinder-shaped body composed of pyrolytic boron nitride was produced. Then an outer surface of the cylinder-shaped body was subjected to surface treatment to obtain the surface roughness of Ra=1.1 µm and Rmax=11.7 µm. Further, a coating layer composed of carbon-containing pyrolytic boron nitride and having a thickness of 25 µm was formed on the outer surface of the cylinder-shaped body by reacting ammonia 5SLM, boron trichloride 2SLM and methane 1SLM under the pressure of 10 Torr and the temperature of 1800 °C.

A thermal shock resistance test was made on the thus-obtained protective tube in such a way that the protective tube is heated to 700 °C and then thrown into water. The carbon-containing pyrolytic boron nitride layer serving as the coating layer did not exfoliate even after heating and throwing into water had been repeated 10 times.

### (Example 3)

In the same manner as Example 1, a cylinder-shaped body composed of pyrolytic boron nitride was produced. Then an outer surface of the cylinder-shaped body was subjected to surface treatment to obtain the surface roughness of Ra=1.3 µm and Rmax=10.4 µm. Next, a coating layer composed of pyrolytic carbon having a thickness of 25 µm was formed on the outer surface of the cylinder-shaped body in the same manner as Example 1. The linear expansion coefficient of the cylinder-shaped body composed of pyrolytic boron nitride was 3.5×10⁻⁶ /°C and that of the coating layer composed of pyrolytic carbon was 1.7×10⁻⁶ /°C, so the difference between the two was 1.8× 10⁻⁶ /°C

A thermal shock resistance test was made on the thus-obtained protective tube in the same manner as Example 2. The pyrolytic carbon layer serving as the coating layer did not exfoliate even after heating and throwing into water had been repeated 10 times.

The present invention is not limited to the embodiments described above. The above-described embodiments are mere examples and those having the substantially same structure as that described in the appended claims and providing the similar working effect are included in the scope of the present invention.

## Claims

1. A thermocouple protective tube (3) for protecting a thermocouple wire, comprising a hollow cylinder-shaped body (1) which has one end closed and is composed of pyrolytic boron nitride, and a coating layer (2) which is formed on the outer surface of the cylinder-shaped body and is composed of at least one material selected from pyrolytic carbon, carbon-containing pyrolytic boron nitride, silicon nitride, silicon carbide and aluminum nitride.

2. The thermocouple protective tube according to Claim 1, **characterized in that** the coating layer is formed on the outer surface of the cylinder-shaped body by chemical vapor deposition.

3. The thermocouple protective tube according to Claim 1 or 2, **characterized in that** a thickness of the cylinder-shaped body is within the range of 0.3-1.5 mm.

4. The thermocouple protective tube according to any one of Claims 1 to 3, wherein a thickness of the coating layer is within the range of 5-50 µm.

5. The thermocouple protective tube according to any one of Claims 1 to 4, wherein a surface roughness of the cylinder-shaped body is not less than 0.5 µm in terms of Ra and not less than 5 µm in terms of Rmax.

6. The thermocouple protective tube according to any one of Claims 1 to 5, **characterized in that** a difference in coefficient of linear expansion between the cylinder-shaped body and the coating layer is not more than 2.5×10⁻⁶ /°C.

7. The thermocouple protective tube according to any one of Claims 1 to 6, **characterized in that** density of the cylinder-shaped body is not less than 1.9 g/cm³ and not more than 2.1 g/cm³.

8. The thermocouple protective tube according to any one of Claims 1 to 7, **characterized in that** an outer diameter of the cylinder-shaped body is not less than 3 mm and not more than 15 mm.

## Patentansprüche

1. Ein Schutzrohr für ein Thermoelement (3) zum Schutz eines Thermoelementdrahts, das einen hohlen zylinderförmigen Körper (1), welcher ein Ende aufweist, das geschlossen ist, und aus pyrolytischem Bornitrid zusammengesetzt ist, und eine Beschichtungsschicht (2), die auf der äußeren Oberfläche des zylinderförmigen Körpers gebildet ist und aus mindestens einem Material, das aus pyrolytischem Kohlenstoff, Kohlenstoff enthaltendem pyrolytischem Bornitrid, Siliziumnitrid, Siliziumkarbid und Aluminiumnitrid ausgewählt wird, zusammengesetzt ist, beinhaltet.

2. Schutzrohr für ein Thermoelement gemäß Anspruch 1, **dadurch gekennzeichnet, dass** die Beschichtungsschicht durch chemische Aufdampfung auf der äußeren Oberfläche des zylinderförmigen Körpers gebildet ist.

3. Schutzrohr für ein Thermoelement gemäß Anspruch 1 oder 2, **dadurch gekennzeichnet, dass** eine Dicke des zylinderförmigen Körpers in dem Bereich von 0,3-1,5 mm liegt.

4. Schutzrohr für ein Thermoelement gemäß einem der Ansprüche 1 bis 3, wobei eine Dicke der Beschichtungsschicht in dem Bereich von 5-50 µm liegt.

5. Schutzrohr für ein Thermoelement gemäß einem der Ansprüche 1 bis 4, wobei eine Oberflächenrauheit des zylinderförmigen Körpers hinsichtlich Ra nicht weniger als 0,5 µm und hinsichtlich Rmax nicht weniger als 5 µm beträgt.

6. Schutzrohr für ein Thermoelement gemäß einem der Ansprüche 1 bis 5, **dadurch gekennzeichnet, dass** ein Koeffizientenunterschied der linearen Ausdehnung zwischen dem zylinderförmigen Körper und der Beschichtungsschicht nicht mehr als 2,5 x 10⁻⁶/°C beträgt.

7. Schutzrohr für ein Thermoelement gemäß einem der Ansprüche 1 bis 6, **dadurch gekennzeichnet, dass** die Dichte des zylinderförmigen Körpers nicht weniger als 1,9 g/cm³ und nicht mehr als 2,1 g/cm³ beträgt.

8. Schutzrohr für ein Thermoelement gemäß einem der Ansprüche 1 bis 7, **dadurch gekennzeichnet, dass** ein äußerer Durchmesser des zylinderförmigen Körpers nicht weniger als 3 mm und nicht mehr als 15 mm beträgt.

## Revendications

1. Un tube de protection pour thermocouple (3) destiné à protéger un fil de thermocouple, comportant un corps configuré en cylindre creux (1) qui a une extrémité fermée et est composé de nitrure de bore pyrolytique, et une couche de revêtement (2) qui est formée sur la surface externe du corps configuré en cylindre et est composée d'au moins un matériau sélectionné parmi le carbone pyrolytique, le nitrure de bore pyrolytique contenant du carbone, le nitrure de silicium, le carbure de silicium et le nitrure d'aluminium.

2. Le tube de protection pour thermocouple selon la revendication 1, **caractérisé en ce que** la couche de revêtement est formée sur la surface externe du corps configuré en cylindre par dépôt chimique en phase vapeur.

3. Le tube de protection pour thermocouple selon la revendication 1 ou 2, **caractérisé en ce qu'**une épaisseur du corps configuré en cylindre est dans la gamme qui va de 0,3 à 1,5 mm.

4. Le tube de protection pour thermocouple selon n'importe laquelle des revendications 1 à 3, dans lequel une épaisseur de la couche de revêtement est dans la gamme qui va de 5 à 50 µm.

5. Le tube de protection pour thermocouple selon n'importe laquelle des revendications 1 à 4, dans lequel une rugosité de surface du corps configuré en cylindre n'est pas inférieure à 0,5 µm en terme de Ra et n'est pas inférieure à 5 µm en terme de Rmax.

6. Le tube de protection pour thermocouple selon n'importe laquelle des revendications 1 à 5, **caractérisé en ce qu'**une différence de coefficient d'expansion linéaire entre le corps configuré en cylindre et la couche de revêtement n'est pas supérieure à 2,5 x 10⁻⁶/°C.

7. Le tube de protection pour thermocouple selon n'importe laquelle des revendications 1 à 6, **caractérisé en ce que** la densité du corps configuré en cylindre n'est pas inférieure à 1,9 g/cm³ et pas supérieure à 2,1 g/cm³.

8. Le tube de protection pour thermocouple selon n'importe laquelle des revendications 1 à 7, **caractérisé en ce qu'**un diamètre externe du corps configuré en cylindre n'est pas inférieur à 3 mm et pas supérieur à 15 mm.
